(19) Europäisches Patentamt
European Patent Office
Office européen des brevets

(11) EP 3 613 780 A1

(12) EUROPEAN PATENT APPLICATION
published in accordance with Art. 153(4) EPC

(43) Date of publication:
**26.02.2020 Bulletin 2020/09**

(21) Application number: **18787549.7**

(22) Date of filing: **04.04.2018**

(51) Int Cl.:
***C08F 212/34*** *(2006.01)* ***C08F 222/40*** *(2006.01)*
***C08L 61/06*** *(2006.01)*

(86) International application number:
**PCT/JP2018/014455**

(87) International publication number:
**WO 2018/193850 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2017 JP 2017082701**

(71) Applicant: **Showa Denko K.K.**
**Tokyo 105-8518 (JP)**

(72) Inventors:
- **HASEGAWA, AOI**
  **Tokyo 105-8518 (JP)**
- **ISHIBASHI, Yoshitaka**
  **Tokyo 105-8518 (JP)**

(74) Representative: **Strehl Schübel-Hopf & Partner**
**Maximilianstrasse 54**
**80538 München (DE)**

# (54) CURABLE RESIN COMPOSITION, CURED PRODUCT THEREOF, AND STRUCTURE INCLUDING CURED PRODUCT THEREOF

(57) A curable resin composition with which a cured resin product having excellent heat resistance and flame retardancy can be obtained by curing is provided.

A curable resin composition comprising a polyalkenyl phenol compound (A) and a polymaleimide compound (B), wherein the polyalkenyl phenol compound (A) is a compound containing at least two structural units represented by the following formula (1a):

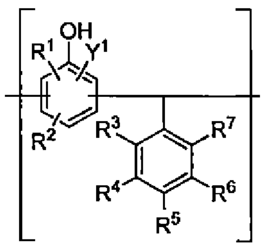

(1a)

where $R^1$ to $R^7$ each independently represent a hydrogen atom, a $C_{1-10}$ alkyl group, a $C_{1-2}$ alkoxy group, a $C_{2-6}$ alkenyl group, or a hydroxy group, $Y^1$ is an alkenyl group.

EP 3 613 780 A1

## Description

FIELD

The present invention relates to a curable resin composition, a cured product thereof, and a structure comprising the cured product thereof.

BACKGROUND

In recent years, in order to achieve higher quality electronic devices having greater functionality and higher speed, it is necessary to further increase the density, reduce the size, and reduce the thickness of semiconductor packages used in electronic devices. In particular, high-density integration of electronic devices and further high-density mounting are progressing along with the demand for greater functionality, etc., of electronic devices, and thus, miniaturization and increased density of semiconductor packages compatible with high-density mounting are accelerating. Along with the high-density integration of semiconductor packages, there is an increasing demand for materials that can withstand use in high temperature environments, enabling higher power operation. Additionally, it is important to restrain excessive increases in costs. Wire bond-type and flip chip-type BGAs (Ball Grid Arrays) are used as semiconductor packages.

Conventionally, epoxy resins have been used as the encapsulation material for semiconductors from the viewpoints of moldability, adhesiveness, electrical properties, heat resistance, and moisture resistance. However, epoxy resins generally have a heat resistance temperature that can be used at around 150 to 200 °C, and continuous use for long periods of time in temperature ranges exceeding 200 °C is difficult. Thus, there is an attempt to improve the heat resistance of epoxy resins by introducing a skeleton such as a naphthalene skeleton or a tetraphenyl skeleton into the epoxy resin. However, since these structures are special structures, they are expensive, their practical applications are limited, and their heat resistance is not sufficient.

Compositions comprising an alkenyl phenol compound and a maleimide compound as thermosetting resins having a high heat resistance are known (for example, Patent Literature 1 (Japanese Unexamined Patent Publication (Kokai) No. 2016-74902) and Patent Literature 2 (Japanese Unexamined Patent Publication (Kokai) No. 7-165825)). By radically polymerizing the alkenyl group of the alkenyl phenol compound and the unsaturated group of the maleimide compound with each other to bridge highly, a cured product (glass transition temperature: 200 to 350 °C) having a heat resistance higher than that of epoxy resins is obtained.

[CITATION LIST]

[PATENT LITERATURE]

[PTL 1] Japanese Unexamined Patent Publication (Kokai) No. 2016-74902

[PTL 2] Japanese Unexamined Patent Publication (Kokai) No. 7-165825


SUMMARY

[TECHNICAL PROBLEM]

In order to use the semiconductor encapsulation material in high temperature environments, it is also important that the encapsulation material have a high flame retardancy to ensure safety. The UL94 standard by Underwriters Laboratories, Inc., is a representative standard thereof. It is desirable to achieve a score of V-0 in the burning assessment (Vertical Burning Test: V).

However, Patent Literature 1 does not describe flame retardancy at all. Patent Literature 2 describes only that flame-retardant compounds such as chlorinated paraffin and phosphoric acid ester can be mixed in the heat-curable resin composition. A heat-curable resin composition that provides a cured product having a high heat resistance and flame retardancy has not been proposed.

In light of the foregoing, the present invention aims to provide a curable resin composition with which a cured product having excellent heat resistance and flame retardancy can be obtained.

[SOLUTION TO PROBLEM]

As a result of rigorous investigation, the present inventors have discovered that a composition comprising an alkenylated (an alkenyl group is bonded to the aromatic ring) polyphenol compounding having a specific basic skeleton, and a polymaleimide compound can provide a curable resin composition with which a cured resin product having excellent heat resistance and flame retardancy can be obtained by curing. In other words, the present invention includes the following Aspects.

[1] A curable resin composition comprising a polyalkenyl phenol compound (A) and a polymaleimide compound (B), wherein the polyalkenyl phenol compound (A) is a compound containing at least two structural units represented by the following formula (1a) or formula (1b), or a compound containing a structural unit represented by the following formula (1c):

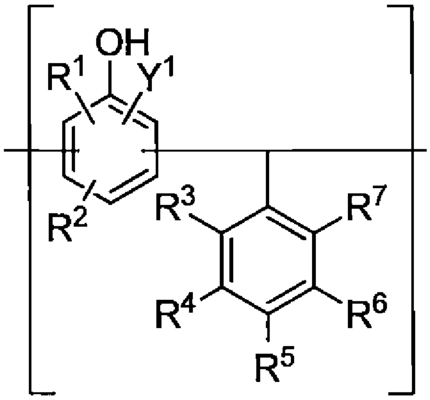

(1a)

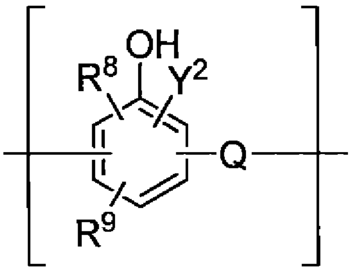

(1b)

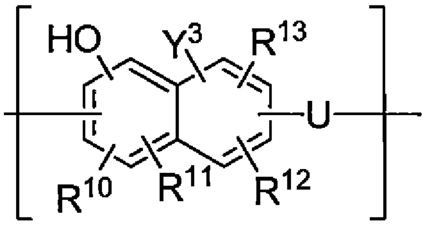

(1c)

where $R^1$ to $R^{13}$ each independently represent a hydrogen atom, a $C_{1-10}$ alkyl group, a $C_{1-2}$ alkoxy group, a $C_{2-6}$ alkenyl group, or a hydroxy group, $R^{10}$ to $R^{13}$ may be located on any of the carbon atoms constituting the naphthalene ring, Q represents a divalent organic group containing, in the main chain, an aromatic group which does not contain a phenolic hydroxy group, U represents a divalent organic group containing an aromatic ring, and $Y^1$ to $Y^3$ are each independently an alkenyl group represented by the following formula (2):

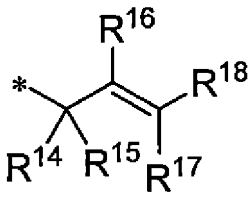

(2)

where $R^{14}$, $R^{15}$, $R^{16}$, $R^{17}$, and $R^{18}$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

[2] The curable resin composition according to [1], wherein $R^1$, $R^2$, $R^8$, $R^9$, $R^{10}$, $R^{11}$, $R^{12}$ and $R^{13}$ in formulas (1a), (1b), and (1c) are hydrogen atoms.

[3] The curable resin composition according to [1] or [2], wherein the polyalkenyl phenol compound (A) is a compound containing at least two structural units represented by formula (1a), or is a compound containing a structural unit represented by formula (1c).

[4] The curable resin composition according to any one of [1] to [3], wherein $R^3$ to $R^7$ in formula (1a) are each independent selected from a hydrogen atom, an allyl group, and a hydroxy group.

[5] The curable resin composition according to [1] or [2], wherein Q and U in formulas (1b) and (1c) are at least one selected from a 1,4-phenylene bis-methylene group and a 4,4'-biphenylene bis-methylene group.

[6] The curable resin composition according to any one of [1] to [5], wherein the degree of polymerization of the polyalkenyl phenol compound (A), as determined from the molecular weight distribution measured by GPC, is 2 to 20.

[7] The curable resin composition according to any one of [1] to [6], wherein the polyalkenyl phenol compound (A) is included in an amount of 5 to 200 parts by mass relative to 100 parts by mass of the polymaleimide compound (B).

[8] The curable resin composition according to any one of [1] to [7], wherein the polymaleimide compound (B) is an aromatic polymaleimide compound.

[9] The curable resin composition according to [8], wherein the polymaleimide compound (B) is at least one compound selected from bis(4-maleimidophenyl)methane and 2,2-bis[4-(4-maleimidophenyloxy)phenyl]propane.

[10] The curable resin composition according to any one of [1] to [9], further comprising a polyalkylene phenol compound (C) containing a structural unit represented by the following formula (3):

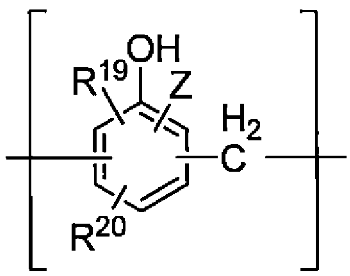

(3)

where $R^{19}$ and $R^{20}$ each independently represent a hydrogen atom, a $C_{1-10}$ alkyl group, or a $C_{1-2}$ alkoxy group or hydroxy group, and Z is an alkenyl group represented by the following formula (4):

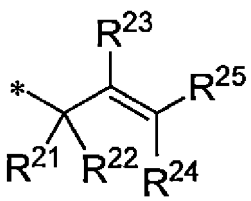

(4)

where $R^{21}$, $R^{22}$, $R^{23}$, $R^{24}$, and $R^{25}$ each independently represents a hydrogen atom, a $C_{1-5}$ alkyl group, a $C_{5-10}$ cycloalkyl group, or a $C_{6-12}$ aryl group, and * represents the bonding portion with the aromatic ring.

[11] The curable resin composition according to [10], wherein the polyalkenyl phenol compound (C) is included in an amount of 5 to 2000 parts by mass relative to 100 parts by mass of the polyalkenyl phenol compound (A).

[12] The curable resin composition according to any one of [1] to [11], further comprising a curing accelerator (D) in an amount of 0.01 to 10 parts by mass relative to a total 100 parts by mass of the polyalkenyl phenol compound (A), the polymaleimide compound (B), and the polyalkenyl phenol compound (C) (when present).

[13] The curable resin composition according to any one of [1] to [12], further comprising a filler (E).
[14] A cured product of the curable resin composition according to any one of [1] to [13].
[15] A structure comprising a cured produce of the curable resin composition according to any one of [1] to [13].

[ADVANTAGEOUS EFFECTS OF INVENTION]

The present invention can provide a curable resin composition with which a cured product having excellent heat resistance and flame retardancy can be obtained.

DESCRIPTION OF EMBODIMENTS

The present invention will be described in detail below. The curable resin composition of the present invention comprises a polyalkenyl phenol compound (A) and a polymaleimide compound (B) as indispensable components.

[Polyalkenyl Phenol Compound (A)]

The polyalkenyl phenol compound (A) is a compound which contains at least two structural units represented by formula (1a) or (1b) below, or includes a structural unit represented by formula (1c) below, and which can be obtained by, for example, Claisen rearrangement of a poly-2-alkenyl aromatic ether compound.

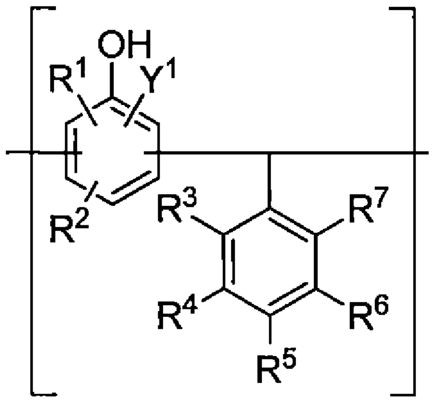
(1a)

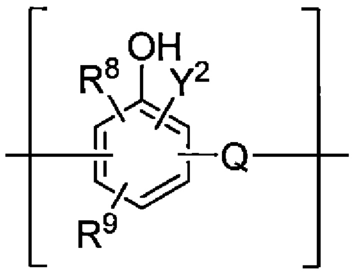
(1b)

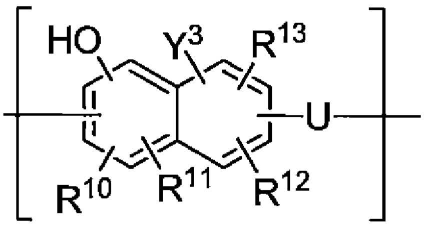
(1c)

In formulas (1a), (1b), and (1c), $R^1$ to $R^{13}$ each independently represent a hydrogen atom, a $C_{1-10}$ alkyl group, a $C_{1-2}$ alkoxy group, a $C_{2-6}$ alkenyl group, or a hydroxy group, $R^{10}$ to $R^{13}$ may be located on any of the carbon atoms constituting the naphthalene ring, Q represents a divalent organic group containing, in the main chain, an aromatic group which does not contain a phenolic hydroxy group, U represents a divalent organic group containing an aromatic ring, and $Y^1$ to $Y^3$ are each independently an alkenyl group represented by the following formula (2):

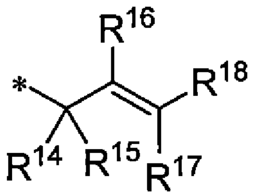

(2)

where $R^{14}$, $R^{15}$, $R^{16}$, $R^{17}$, and $R^{18}$ in formula (2) each independently represent a hydrogen atom, a $C_{1-5}$ alkyl group, a $C_{5-10}$ cycloalkyl group, or a $C_{6-12}$ aryl group, and * represents the bonding portion with the aromatic ring.

"Each independently" means that a plurality of $R^1$ contained in the compound may be the same or may be different. The same is true for substituents $R^2$ to $R^{18}$, divalent groups Q and U, and substituents such as compound (C) described below.

Specific examples of the $C_{1-10}$ alkyl group constituting $R^1$ to $R^{13}$ in formulas (1a), (1b), and (1c) include methyl groups, ethyl groups, n-propyl groups, isopropyl groups, n-butyl groups, sec-butyl groups, t-butyl groups, n-pentyl groups, n-hexyl groups, octyl groups, nonyl groups, and decyl groups. Specific examples of the $C_{1-2}$ alkoxy group include methoxy groups and ethoxy groups. Specific examples of the $C_{2-6}$ alkenyl group include vinyl groups, allyl groups, butenyl groups, pentenyl groups, and hexenyl groups.

The polyalkenyl phenol compound (A) is preferably a compound containing at least two structural units represented by formula (1a), or including a structural unit represented by formula (1c).

Since a naphthyl group having high thermal decomposition resistance is included in the main chain, compounds including the structural unit represented by formula (1c) are particularly excellent in flame retardancy. In certain embodiments, the polyalkenyl phenol compound (A) is a compound containing at least two structural units represented by formula (1c).

It is preferable that the polyalkenyl phenol compound (A) be a compound containing at least two structural units represented by formula (1a) since the heat resistance of a cured product obtained therewith is high.

In a certain embodiment, $R^3$ to $R^7$ in formula (1a) are each independent selected from a hydrogen atom, an allyl group, and a hydroxy group. In another embodiment, one of $R^3$ to $R^7$ in formula (1a) is a hydroxy group, one is an allyl group, and the remaining three are hydrogen atoms. In yet another embodiment, $R^3$ to $R^7$ in formula (1a) are each independently selected from a hydrogen atom, a $C_{1-10}$ alkyl group, a $C_{1-2}$ alkoxy group, and a $C_{2-6}$ alkenyl group. In another embodiment, one of $R^3$ to $R^7$ in formula (1a) is a $C_{2-6}$ alkenyl group, and the remaining are each independently selected from a hydrogen atom, a $C_{1-10}$ alkyl group, a $C_{1-2}$ alkoxy group, and a hydroxy group. A polyalkenyl phenol compound (A) in which one of $R^3$ to $R^7$ of formula (1a) is a $C_{2-6}$ alkenyl group and one is a hydroxy group is particularly excellent in flame retardancy since a cured product having a high crosslinking density can be obtained therewith and many hydroxy groups are present. In another embodiment, at least one, at least two, at least three, at least four, or all of $R^3$ to $R^7$ in formula (1a) are hydrogen atoms.

In a certain embodiment, it is preferable that $R^1$, $R^2$, $R^8$, $R^9$, $R^{10}$, $R^{11}$, $R^{12}$, and $R^{13}$ in formulas (1a), (1b), and (1c) be hydrogen atoms from the viewpoint of low steric hindrance and excellent reaction rate. In another embodiment, from the viewpoint of high heat resistance of a cured product obtained therewith, it is preferable that at least one of $R^1$ and $R^2$ of formula (1a), $R^8$ and $R^9$ of formula (1b), and $R^{10}$, $R^{11}$, $R^{12}$, and $R^{13}$ of formula (1c) be a $C_{1-10}$ alkyl group, a $C_{1-2}$ alkoxy group, or a $C_{2-6}$ alkenyl group. One of the factors why a cured product having a high heat resistance can be obtained therewith is due to the high crosslinking density of the obtained cured product.

In a certain embodiment, at least one, at least two, or at least three of $R^{10}$ to $R^{13}$ in formula (1c) is a hydrogen group. In another embodiment, at least one of $R^{10}$ to $R^{13}$ in formula (1c) is a hydroxy group. In another embodiment, at least one of $R^{10}$ to $R^{13}$ of formula (1c) is an allyl group.

It is preferable that the carbon number of the divalent organic group containing, on the main chain thereof, the aromatic ring, which does not contain a phenolic hydroxy group, constituting Q in formula (1b) be 6 to 14. A divalent organic group containing, on the main chain thereof, an aromatic ring which does not contain a phenolic hydroxy group preferably does not contain saturated carbons, which are continuously present on the main chain. When saturated carbons are not continuously present on the main chain of the divalent group Q, it is believed that since the density of the aromatic ring of the obtained cured product is high, particularly excellent flame retardancy can be obtained. Specific examples of $C_{6-14}$ divalent organic groups containing, on the main chain thereof, an aromatic ring which does not contain a phenolic hydroxy group include phenylene groups, methylphenylene groups, naphthylene groups, biphenylene groups, fluorenylene groups, anthracenylene groups, xylylene groups, 4,4-methylene diphenyl groups, 1,4-phenylene bis-methylene groups, and 4,4'- biphenylene bis-methylene groups.

Among these, from the viewpoint of a high flame retardancy of the obtained cured product, Q is preferably a 1,4-phenylene bis-methylene group or a 4,4'- biphenylene bis-methylene group.

It is preferable that the carbon number of the divalent organic group containing the aromatic ring constituting

the U in formula (1c) be 6 to 14. It is preferable that the divalent organic group containing the aromatic ring constituting the U be a divalent organic group containing an aromatic ring on the main chain thereof. It is preferable that the divalent organic group containing an aromatic ring constituting U be a divalent organic group containing an aromatic ring which does not contain a phenolic hydroxy group. Specific examples of $C_{6-14}$ divalent organic groups containing an aromatic ring includes phenylene groups, methylphenylene groups, naphthylene groups, biphenylene groups, fluorenylene groups, anthracenylene groups, xylylene groups, 4,4-methylene diphenyl groups, 1,4-phenylene bis-methylene groups, and 4,4'-biphenylene bis-methylene groups.

Among these, from the viewpoint of a high flame retardancy of the obtained cured product, U is preferably a 1,4-phenylene bis-methylene group or a 4,4'- biphenylene bis-methylene group.

Specific examples of the $C_{1-5}$ alkyl groups constituting $R^{14}$, $R^{15}$, $R^{16}$, $R^{17}$, and $R^{18}$ in formula (2) include methyl groups, ethyl groups, n-propyl groups, isopropyl groups, n-butyl groups, sec-butyl groups, t-butyl groups, and n-pentyl groups. Specific examples of $C_{5-10}$ cycloalkyl groups include cyclopentyl groups, cyclohexyl groups, methylcyclohexyl groups, and cycloheptyl groups. Specific examples of $C_{6-12}$ aryl groups include phenyl groups, methylphenyl groups, ethylphenyl groups, biphenyl groups, and naphthyl groups. Among these, $R^{14}$, $R^{15}$, $R^{16}$, $R^{17}$, and $R^{18}$ are all preferably hydrogen atoms, i.e., the alkyenyl group represented by formula (2) is preferably an allyl group.

The polyalkenyl phenol compound (A) may be a mixture of compounds having different numbers of structural units. In the present embodiment, the average value (degree of polymerization) per molecule of the total number of structural units represented by formulas (1a), (1b), and (1c) is preferably 2 to 20, more preferably 2 to 15, and further preferably 2 to 10. When the average value per molecule of the total number of structural units is 2 or more, the heat resistance of the cured product, which is the ultimately desired object, obtained by using the polyalkenyl phenol compound as a curing agent is more favorable, and when the average value is 20 or less, fluidity during molding is more favorable.

When the number average molecular weight calculated by GPC is Mn and the molecular weight of the repeating structure of the polyalkenyl phenol compound is M, the degree of polymerization P is determined from the following formula:

$$P = Mn / M$$

The number average molecular weight of the polyalkenyl phenol compound (A) is preferably 300 to 5000, more preferably 400 to 4000, and further preferably 500 to 3000. As long as the number average molecular weight is 300 or more, when the cured product of the curable resin composition is placed in a high temperature environment, the thermal decomposition starting temperature is more suitable, and as long as the number average molecular weight is 5000 or less, the viscosity of the curable resin composition is within a more preferable range for processing at the time of molding.

The polyalkenyl phenol compound (A) can be obtained by rearrangement of the 2-alkenyl group by Claisen rearrangement after carrying out alkenyl etherification on a part of the hydroxy groups of a phenolic resin, which is a raw material. It is preferable that a known phenolic resin containing structural units represented by formula (5a), (5b), or (5c) below be used as the raw material phenolic resin.

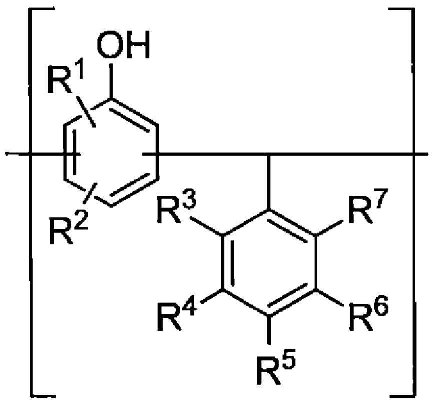

(5a)

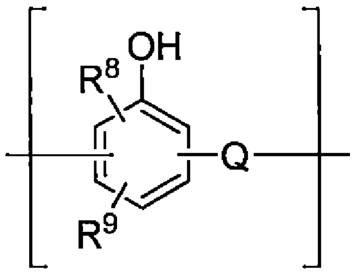

(5b)

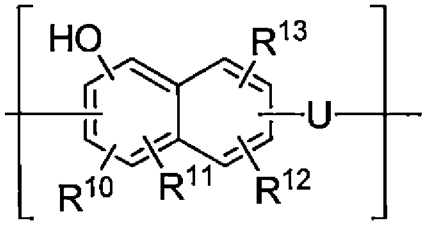

(5c)

where $R^1$ to $R^{13}$, Q, and U are the same as the $R^1$ to $R^{13}$, Q, and U of formulas (1a), (1b), and (1c).

Specific examples of the raw material phenolic resin of the polyalkenyl phenol compound (A) include phenol aralkyl resins, biphenylaralkyl phenolic resins, naphtholaralkyl resins, naphthalenediol aralkyl resins, phenol-benzaldehyde copolymer resins, and phenol-salicylaldehyde copolymer resins.

The 2-alkenyl etherification of the raw material phenolic resin can be carried out by exemplary two methods, (i) a known method in which a halogenated 2-alkenyl compound such as allyl chloride, methallyl chloride, and allyl bromide is reacted with a phenol compound, and (ii) a known method in which a 2-alkenyl carboxylic acid compound such as allyl acetate is reacted with a phenol compound. The method described in, for example, Japanese Unexamined Patent Publication (Kokai) No. 2-91113 can be used as the 2-alkenyl etherification reaction in which a halogenated 2-alkenyl compound is used. The method described in, for example, Japanese Unexamined Patent Publication (Kokai) No. 2011-26253 can be used as the method in which a 2-alkenyl carboxylic acid compound is reacted with a phenolic resin.

The amount of the halogenated 2-alkenyl compound or 2-alkenyl carboxylic acid compound used is preferably 0.4 to 5.0 equiv, and more preferably 0.6 to 4.0 equiv relative to the phenolic hydroxy group. When the amount used is 0.4 equiv or more, the amount of reaction sites with the polymaleimide compound (B) after Claisen rearrangement is more favorable, and a cured product having excellent heat resistance can be obtained. The 2-alkenyl etherification reaction can be carried out by mixing the 2-alkenyl compound with the raw material phenolic resin, and reacting for 4 to 40 hours. In the 2-alkenyl etherification reaction, a solvent can be used to dissolve the raw material phenolic resin. The reaction can also be carried out without the use of a solvent by using a 2-alkenyl carboxylic acid compound capable of dissolving the raw material phenolic resin. The 2-alkenyl etherification rate of the raw material phenolic resin can be controlled by suppressing the reaction rate (conversion rate) of the of the 2-alkenyl compound by using a halogenated 2-alkenyl compound or a 2-alkenyl carboxylic acid compound in an amount greater than the abovementioned amount of the halogenated 2-alkenyl compound or the 2-alkenyl carboxylic acid compound used, and by adjusting the reaction time to a short reaction time.

The target polyalkenyl phenol compound (A) can be obtained by carrying out Claisen rearrangement on the polyalkenyl ether compound produced by the method described in (i) or (ii) above. Claisen rearrangement can be performed by heating the polyalkenyl ether compound to a temperature in the range of 100 to 250 °C, and reacting for 1 to 20 hours. Claisen rearrangement may be carried out using a high boiling point solvent or can be carried out without a solvent. Inorganic salts such as sodium thiosulfate and sodium carbonate can also be added to accelerate the rearrangement reaction. The details are disclosed in Japanese Unexamined Patent Publication (Kokai) No. 2-91113.

[Polymaleimide Compound (B)]

The polymaleimide compound (B) is a compound containing two or more maleimide groups represented by formula (6):

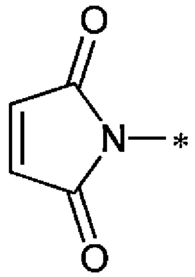

(6)

where * represents the bonding portion with the aromatic ring or an organic group containing a linear, branched, or cyclic aliphatic hydrocarbon group.

Examples of the polymaleimide compound (B) include bis-maleimides such as bis(4-maleimidophenyl)methane, tris-maleimides such as tris(4-maleimidophenyl)methane, tetrakis-maleimides such as bis(3,4-dimaleimidophenyl)methane, and polymaleimides such as poly(4-maleimide styrene). The polymaleimide compound (B) includes an aromatic polymaleimide compound and an aliphatic polymaleimide compound. From the viewpoint of a particularly excellent flame retardancy of the obtained cured product, an aromatic polymaleimide compound is preferable. The aromatic polymaleimide compound is a compound containing two or more maleimide groups represented by formula (6), and these maleimide groups may be bonded to the same or different aromatic rings. Specific examples of the aromatic ring include single rings such as benzene and fused rings such as naphthalene and anthracene. It is preferable that the polymaleimide compound (B) be an aromatic bis-maleimide compound or an aliphatic bis-maleimide compound because they mix well in the curable resin composition. Specific examples of the aromatic bis-maleimide compound include bis(4-maleimidophenyl)methane, bis(3-maleimidophenyl)methane, bis(3-methyl-4-maleimidophenyl)methane, bis(3,5-dimethyl-4-maleimidophenyl)methane, bis(3-ethyl-4-maleimidophenyl)methane, bis(3,5-diethyl-4-maleimidophenyl)methane, bis(3-propyl-4-maleimidophenyl)methane, bis(3,5-dipropyl-4-maleimidophenyl)methane, bis(3-butyl-4-maleimidophenyl)methane, bis(3,5-dibutyl-4-maleimidophenyl)methane, bis(3-ethyl-4-maleimido-5-methylphenyl)methane, 2,2-bis(4-maleimidophenyl)propane, 2,2-bis[4-(4-maleimidophenyloxy)phenyl]propane, bis(4-maleimidophenyl)ether, bis(3-maleimidophenyl)ether, bis(4-maleimidophenyl)ketone, bis(3-maleimidophenyl)ketone, bis(4-maleimidophenyl)sulfone, bis(3-maleimidophenyl)sulfone, bis[4-(4-maleimidophenyloxy)phenyl] sulfone, bis(4-maleimidophenyl)sulfide, bis(3-maleimidophenyl) sulfide, bis(4-maleimidophenyl)sulfoxide, bis(3-maleimidophenyl)sulfoxide, 1,4-bis(4-maleimidophenyl)cyclohexane, 1,4-dimaleimidonaphthalene, 2,3-dimaleimidonaphthalene, 1,5-dimaleimidonaphthalene, 1,8-dimaleimidonaphthalene, 2,6-dimaleimidonaphthalene, 2,7-dimaleimidonaphthalene, 4,4'-dimaleimidobiphenyl, 3,3'-dimaleimidobiphenyl, 3,4'-dimaleimidobiphenyl, 2,5-dimaleimide-1,3-xylene, 2,7-dimaleimidofluorene, 9,9-bis(4-maleimidophenyl)fluorene, 9,9-bis(4-maleimido-3-methylphenyl)fluorene, 9,9-bis(3-ethyl-4-maleimidophenyl)fluorene, 3,7-dimaleimido-2-methoxyfluorene, 9,10-dimaleimidophenanthrene, 1,2-dimaleimidoanthraquinone, 1,5-dimaleimidoanthraquinone, 2,6-dimaleimidoanthraquinone, 1,2-dimaleimidobenzene, 1,3-dimaleimidobenzene, 1,4-dimaleimidobenzene, 1,4-bis(4-maleimidophenyl)benzene, 2-methyl-1,4-dimaleimidobenzene, 2,3-dimethyl-1,4-dimaleimidobenzene, 2,5-dimethyl-1,4-dimaleimidobenzene, 2,6-dimethyl-1,4-dimaleimidobenzene, 4-ethyl-1,3-dimaleimidobenzene, 5-ethyl-1,3-dimaleimidobenzene, 4,6-dimethyl-1,3-dimaleimidobenzene, 2,4,6-trimethyl-1,3-dimaleimidobenzene, 2,3,5,6-tetramethyl-1,4-dimaleimidobenzene, and 4-methyl-1,3-dimaleimidobenzene. Specific examples of the aliphatic bis-maleimide compound include bis(4-maleimidocyclohexyl)methane and bis(3-maleimidocyclohexyl)methane. Among these, bis(4-maleimidophenyl)methane and 2,2-bis[4-(4-maleimidophenyloxy)phenyl]propane are preferable. Examples of commercially available products include the BMI (trade name, manufactured by Daiwa Kasei Kogyo Co., Ltd.) series.

The mixing amount of the polyalkenyl phenol compound (A) is preferably 5 to 200 parts by mass, more preferably 10 to 150 parts by mass, and further preferably 20 to 130 parts by mass when the mixing amount of the polymaleimide compound (B) is 100 parts by mass. As long as the above mixing amount is 5 parts by mass or more, the fluidity/liquidity at the time of shaping/molding is more favorable. Additionally, as long as the above mixing amount is 200 parts by mass or less, the heat resistance of cured product is more favorable.

[Polyalkenyl Phenol Compound (C)]

The curable resin composition may further contain a polyalkenyl phenol compound (C). The polyalkenyl phenol compound (C) is a compound which contains a structural unit represented by formula (3) below and which can be obtained by the Claisen rearrangement of, for example, a poly-2-alkenyl aromatic ether compound. In certain embodiments, the polyalkenyl phenol compound (C) contains at least two structural units represented by formula (3):

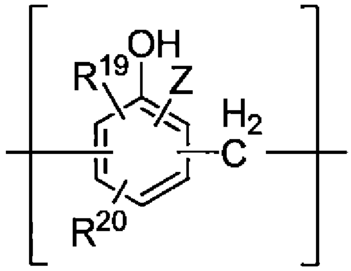
(3)

where $R^{19}$ and $R^{20}$ each independently represent a hydrogen atom, a $C_{1-10}$ alkyl group, a $C_{1-2}$ alkoxy group, or a hydroxy group, and Z is an alkenyl group represented by formula (4) below:

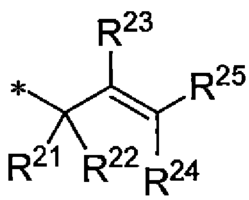
(4)

where $R^{21}$, $R^{22}$, $R^{23}$, $R^{24}$, and $R^{25}$ each independently represents a hydrogen atom, a $C_{1-5}$ alkyl group, a $C_{5-10}$ cycloalkyl group, or a $C_{6-12}$ aryl group, and * represents the bonding portion with the aromatic ring.

Specific examples of the $C_{1-10}$ alkyl group and $C_{1-2}$ alkoxy group constituting $R^{19}$ and $R^{20}$ of formula (3) are the same as those described regarding $R^1$ to $R^{13}$ in formulas (1a), (1b), and (1c). Specific examples of the $C_{1-5}$ alkyl group, $C_{5-10}$ cycloalkyl group, and $C_{6-12}$ aryl group constituting $R^{21}$ to $R^{25}$ of Z of formula (3) represented by formula (4) are the same as those described regarding $Y^1$ to $Y^3$ of formulas (1a), (1b), and (1c).

The total mixing amount of the polyalkenyl phenol compound (A) and the polyalkenyl phenol compound (C) is preferably 10 to 200 parts by mass, more preferably 30 to 180 parts by mass, and further preferably 50 to 150 parts by mass when the mixing amount of the polymaleimide compound (B) is 100 parts by mass. As long as the above mixing amount is 10 parts by mass or greater, fluidity at the time of molding is more favorable. Additionally, as long as the above mixing amount is 200 parts by mass or less, the heat resistance of the cured product is more favorable.

The mixing amount of the polyalkenyl phenol compound (C) is preferably 5 to 2000 parts by mass, more preferably 15 to 1000 parts by mass, and further preferably 20 to 500 parts by mass when the mixing amount of the polyalkenyl phenol compound (A) is 100 parts by mass. As long as the above mixing amount is 5 parts by mass or more, the heat resistance of the cured product is more favorable. Additionally, as long as the above mixing amount is 2000 parts by mass or less, the fluidity at the time of molding is more favorable.

The total content of the polyalkenyl phenol compound (A), the polyalkenyl phenol compound (C), and the polymaleimide compound (B) in the curable resin composition can be, for example, 5% by mass or more, 10% by mass or more, or 20% by mass or more, and can be 100% by mass or less, 95% by mass or less, or 90% by mass or less. In semiconductor encapsulation applications, the above total content is preferably 5 to 50% by mass, more preferably 7 to 45% by mass, and further preferably 10 to 30% by mass.

The polyalkenyl phenol compound (C) can be obtained by rearrangement of the 2-alkenyl group to the ortho position or para position by Claisen rearrangement after carrying out alkenyl etherification on a part of the hydroxy groups of a phenolic resin as a raw material. Thus, in an embodiment of the present invention, Z, which is the alkenyl group represented by formula (4), is bonded with the carbon atom at the ortho position or para position, to phenolic hydroxy group, of the aromatic ring. It is preferable that a known phenolic resin containing a structural unit represented by formula (7) below be used as the raw material phenol.

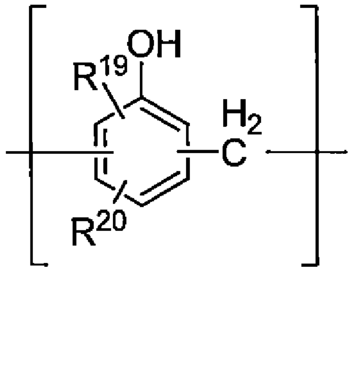
(7)

where $R^{19}$ and $R^{20}$ are the same as $R^{19}$ and $R^{20}$ of formula (3).

Specific examples of the raw material phenolic resin of polyalkenyl phenol compound (C) include phenolic novolak resins and cresol novolak resins.

[Additives]

Various additives can be mixed into the curable resin composition as long as they do not interfer with the curing properties thereof.

Examples of the additives include a curing accelerator (D) and a filler (E).

[Curing Accelerator (D)]

By mixing the curing accelerator (D) into the curable resin composition, the curing of the curable resin composition can be accelerated. Examples of the curing accelerator (D) include radical initiators such as photo radical initiators and thermal radical initiators. The curing accelerator is preferably a thermal radical initiator. Examples of more preferable thermal radial initiators include organic peroxides. Among organic peroxides, organic peroxides having a ten-hour half-life temperature in the range of 100 to 170 °C are further preferable, and specific examples thereof include dicumyl peroxide, 2,5-dimethyl-2,5-di(tert-butylperoxy)hexane, tert-butylcumyl peroxide, di-tert-butyl peroxide, 1,1,3,3-tetramethylbutyl hydroperoxide, and cumene hydroperoxide. The amount of curing accelerator (D) used is preferably 0.01 to 10 parts by mass, more preferably 0.05 to 7.5 parts by mass, and further preferably 0.1 to 5 parts by mass relative to a total 100 parts by mass of the polyalkenyl phenol compound (A), the polymaleimide compound (B), and the polyalkenyl phenol compound (C) (when present). As long as the amount of curing accelerator (D) used is 0.01 parts by mass or greater, the curing reaction proceeds sufficiently, and as long as the amount is 10 parts by mass or less, the storage stability of the curable resin composition is more favorable.

[Filler (E)]

The type of the filler (E) is not particularly limited, and an organic filler such as a silicone powder, and an inorganic filler such as silica and boron nitride can be appropriately used depending on the application.

For example, when the curable resin composition is used in semiconductor encapsulation applications, it is preferable to mix an insulating inorganic filler to obtain a cured product having a low coefficient of thermal expansion. The inorganic filler is not particularly limited and any known inorganic filler can be used. Specific examples of the inorganic filler include particles such as amorphous silica, crystalline silica, alumina, boron nitride, aluminum nitride, and silicon nitride. From the viewpoint of lowering viscosity, spherical amorphous silica is desirable. The inorganic filler may be surface-treated with a silane coupling agent, etc., or may not be surface-treated. The average particle size of the inorganic filler is preferably 0.1 to 30 μm, and it is more preferable that the maximum particle size be 100 μm or less, in particular 75 μm or less. When the average particles size is within this range, the viscosity of the curable resin composition is suitable at the time of use, whereby injectability into narrow pitch wiring or narrow gaps is suitable. This average particle size is the volume cumulative particle size D50 measured with a laser diffraction/scattering particle size distribution measurement device. The content of the inorganic filler of the curable resin composition can be appropriately selected depending on the application. For example, in semiconductor encapsulation applications, the content of the inorganic filler of the curable resin composition is preferably 50 to 95% by mass, more preferably 55 to 93% by mass, and further preferably 70 to 90% by mass.

As other additives, coupling agents, antifoaming agents, coloring agents, fluorescent materials, modifiers, leveling agents, light-diffusing agents, and flame retardants, etc., can be added to the curable resin composition of the present invention. For example, from the viewpoint of improving adhesion, a coupling agent may be added. The coupling agent is not particularly limited, and includes, for example, a silane coupling agent such as vinyltriethoxysilane, vinyltrimethoxysilane, 3-glycidoxypropyltrimethoxysilane, γ-methacryloxypropyltrimethoxysilane, γ-aminopropyltrimethoxysilane, and N-phenyl-3-aminopropyltrimethoxysilane. A single coupling agent may be used or two or more types may be used. The compounding amount of the coupling agent in the curable resin composition is preferably 0.1 to 5% by mass. As long as the above compounding amount is 0.1% by mass or greater, the effect of the coupling agent is sufficiently exhibited, and as long as the compounding amount is 5% by mass or less, the melt viscosity thereof and the hygroscopicity and strength of the cured product are more favorable.

The curable resin composition includes 25 parts by mass or less, more preferably 20 parts by mass or less, of a halogen-based or phosphorus-based flame retardant, relative to a total of 100 parts by mass of the polyalkenyl phenol compound (A) and the polymaleimide compound (B), and especially preferably does not include a halogen-based or phosphorus-based flame retardant. For example, when the curable resin composition is used as a semiconductor encapsulation material, halides are known to cause metal corrosion and to adversely affect electrical reliability. The curable

resin composition according to the present embodiment is excellent in electrical properties such as long-term insulation and is preferably used in the field of electric and electronic materials, etc.

The curable resin composition can be a high solid content composition. In some embodiments, the solid content of the curable resin composition can be, for example, greater than 60% by mass, 70% by mass or more, or 80% by mass or more, and can be 100% by mass or less, 95% by mass or less, or 90% by mass or less. In an embodiment, the curable resin composition does not contain a solvent, i.e., the curable resin composition is a solvent-free composition. In this embodiment, the solid content of the curable resin composition can be 90% by mass or more, 92% by mass or more, or 95% by mass or more, and can be 100% by mass or less, 99% by mass or less, or 98% by mass or less.

[Curable Resin Composition Preparation Method]

The method for the preparation of the curable resin composition is not particularly limited as long as the polyalkenyl phenol compound (A), the polymaleimide compound (B), and the other components can be uniformly mixed. A method in which the polyalkenyl phenol compound (A), the polyalkenyl phenol compound (C), when present, and the polymaleimide compound (B) are first mixed, and thereafter additives are added is preferable since each of the materials can be uniformly mixed.

The method for mixing the polyalkenyl phenol compound (A), the polyalkenyl phenol compound (C), when present, and the polymaleimide compound (B) is not particularly limited. Mixing can be carried out by introducing each of the components into a mixer such as a reaction vessel, pot mill, two-roll mill, three-roll mill, rotary mixer, twin-screw mixer, disper, single- or twin-screw (co-directional or opposite-directional) extruder, and kneader at a prescribed mixing ratio, and thereafter stirring or kneading. On a laboratory scale, a rotary mixer is preferable since the stirring conditions thereof can be easily changed, and industrially, a twin-screw mixer is preferable from the viewpoint of productivity. Each mixing machine can be used by appropriately changing the stirring conditions.

Like the above mixing method, the curable resin composition preparation method is not particularly limited. The curable resin composition can be prepared by introducing the polyalkenyl phenol compound (A), the polyalkenyl phenol compound (C), when present, the polymaleimide compound (B), and additives, when present, into a mixer such as a pot mill, two-roll mill, three-roll mill, rotary mixer, twin screw mixer, disper, single or twin screw (co-directional or opposite-directional) extruder, and kneader at a prescribed mixing ratio and mixing. In the case of pulverization of the curable resin composition, the pulverization is not particularly limited as long as the resin does not melt due to the heat generated during processing.For small amounts, the use of an agate mortar is convenient. When using a commercially available pulverizer, it is preferable that the amount of heat generated during pulverization be small in order to prevent the melting of the mixture. The particle size of the powder is preferably about 1 mm or less.

[Structure Production Method]

The curable resin composition can be melted by heating. The structure can be produced by molding the melted curable resin composition into a desired preferable shape, and curing as necessary. Transfer molding and compression molding are preferable as the structure production method. In transfer molding, preferred conditions include, in the case of, for example, a mold having a size of 10 mm × 75 mm × 3 mm thick, a temperature of the top plate and mold in the range of 170 to 190 °C, a retention pressure of 50 to 150 kg/cm$^2$, and a retention time of 1.5 to 5 minutes. Preferred conditions of compressing molding include, in the case of, for example, a mold having a size of 100 mm × 75 mm × 3 mm thick, a temperature of the top plate and mold in the range of 170 to 190 °C, a molding pressure of 5 to 20 MPa, and a pressurization time of 1.5 to 10 minutes.

[Cured Product Production Method]

The curable resin composition can be cured by heating. The thermal curing conditions are preferably 110 to 300 °C, more preferably 120 to 280 °C, and further preferably 130 to 250 °C. As long as the temperature is 110 °C or more, curing proceeds sufficiently in a more suitable time, and as long as the temperature is 300 °C or less, the components are less deteriorated or volatilized, whereby the safety of the equipment is maintained. The heating time can be appropriately changed in accordance with the curable resin composition and the curing temperature, but is preferably 0.1 to 24 hours from the viewpoint of productivity. The heating may be divided into a plurality of repetitions. When a particularly high degree of curing is desired, it is preferable that the final curing temperature be 250 °C or less, more preferably 230 °C or less by, for example, raising the temperature as the curing progresses, without curing at an excessively high temperature.

[Heat Resistance]

The heat resistance can be evaluated from, for example, the value of the glass transition temperature (Tg) of the cured product of the curable resin composition. Tg is measured by thermo-mechanical analysis (TMA). For example, a TMA/SS6100 thermo-mechanical analyzer manufactured by SII Nanotechnology, Inc., can be used. When measurement is performed using a 5 mm × 5 mm × 5 mm sample at a temperature in the range of 30 to 300 °C, a temperature increase rate of 5 °C/min, and a load of 20.0 mN the temperature of the displacement point of the linear expansion coefficient is Tg. The heat resistance is suitable at 250 °C or higher of Tg.

[Flame Retardancy]

The flame retardancy can be evaluated by, for example, a burning assessment (Vertical Burning Test: V) in accordance with the UL-94 standard. The test method of UL-94 VTM-0 and the criterion are as follows.

A plurality of 1.6 mm thick × 125 mm long × 13 mm wide samples are prepared. Each sample is vertically mounted on a clamp, and five samples are contacted with a 20 mm flame, respectively, for ten seconds twice and V-0, V-1, V-2, and Not are determined from the combustion behavior. The determination criteria are shown in Table 1.

| Determination Criteria | Flammability Classification | | |
|---|---|---|---|
| | V-0 | V-1 | V-2 |
| Burning Time of Each Sample | 10 sec or less | 30 sec or less | 30 sec or less |
| Total Burning Time of Five Samples | 50 sec or less | 250 sec or less | 250 sec or less |
| Burning and Glowing Time of Each Sample | 30 sec or less | 60 sec or less | 60 sec or less |
| Burning up to Clamp | No | No | No |
| Cotton Ignited by Dripping | No | No | Yes |

[Cured Product Applications]

The cured product of the curable resin composition of the present invention can be used in applications such as semiconductor encapsulation materials, prepregs, interlayer insulation resins, solder resists, and die attachments.

EXAMPLES

The present invention will be specifically described below based on the Examples and Comparative Examples. However, the present invention is not limited to these Examples.

The analysis methods and characteristics evaluation methods used in the Examples and Comparative Examples are as described below.

[Characteristics Evaluation Methods]

•Molecular Weight

The GPC measurement conditions are as described below.

| | |
|---|---|
| Device Name: | JASCO LC-2000 plus (manufactured by JASCO Corporation) |
| Column: | Shodex™ LF-804 (manufactured by Showa Denko Corporation) |
| Mobile Phase: | Tetrahydrofuran |
| Flow Rate: | 1.0 mL/min |
| Detector: | JASCO RI-2031 plus (manufactured by JASCO Corporation) |
| Temperature: | 40 °C |

The number average molecular weight Mn and the weight average molecular weight Mw are detected under the above measurement conditions using a calibration curve generated using a polystyrene reference material.

•Degree of Polymerization

The degree of polymerization P is determined with the following formula:

$$P = Mn / M$$

where Mn is the number average molecular weight detected by GPC and M is the molecular weight of the structural units of the polyalkenyl phenol compound.

•Glass Transition Temperature (Tg)

Glass transition temperature measurement samples are prepared using a powder curable resin composition by molding with a transfer molding machine at a mold temperature of 180 °C, a retention pressure of 100 kg/cm$^2$, and a retention time of 3 minutes. After heating at 230 °C for six hours and curing, the samples are measured by thermo-mechanical analysis (TMA). Measurement of a 5 mm × 5 mm × 5 mm sample is performed using a TMA/SS6100 thermo-mechanical analyzer manufactured by SII Nanotechnology Co., Ltd., in a temperature range of 30 to 300 °C at a temperature increase rate of 5 °C/min and a load of 20.0 mN, and the temperature of the displacement point of the linear expansion coefficient is set as the Tg. The results are shown in Table 2.

•Burning Assessment

A plurality of burning assessment samples (1.6 mm thickness × 125 mm length x 13 mm width) are prepared using a powder curable resin composition by molding with a transfer molding machine at a mold temperature of 180 °C, a retention pressure of 100 kg/cm$^2$, and a retention time of 3 minutes. After heating at 230 °C for six hours and curing, a UL94 standard burning assessment (Vertical Burning Test: V) is performed for each sample. The UL94 VTM-0 test method is as described below.

Each of five samples is attached vertically to a clamp, and contacted with a 20 mm flame, respectively, for ten seconds twice, and V-0, V-1, V-2, or Not is determined from the combustion behavior. The determination criteria are as shown in Table 1. The results are shown in Table 2.

[Production of Polyalkenyl Phenol Compounds]

• Polyallyl Phenol Compound A1

In formula (1a), $R^1$ and $R^2$ = hydrogen atom, $R^3$ = hydroxy group, $R^4$ = allyl group, $R^5$ to $R^7$ = hydrogen atom, and in formula (2), $R^{14}$ to $R^{18}$ = hydrogen atom.

A compound allylated at the ortho position or the para position to phenolic hydroxy group (hydroxy group: 168 equiv, number average molecular weight Mn: 600, weight average molecular weight Mw: 800, degree of polymerization: 3.5) was produced using a triphenylmethane-type phenolic resin Shonol™ TRI-002 (manufactured by Showa Denko, Co., Ltd.) by the following method. A solution in which 201 g (1.45 mol) of potassium carbonate (manufactured by Nippon Soda Co., Ltd.) has been dissolved in 150 g of pure water, and 150.0 g (hydroxy group: 1.4 mol) of the triphenylmethane-type phenolic resin Shonol™ TRI-002 (manufactured by Showa Denko, Co., Ltd.; number average molecular weight Mn: 400, weight average molecular weight Mw: 500) were charged into a 1000 mL tri-neck flask, and thereafter the vessel was purged with nitrogen gas and heated to 85 °C. Under a nitrogen gas flow, 204 g (2.04 mol) of allyl acetate (manufactured by Showa Denko, Co., Ltd.), 3.82 g (14.6 mmol) of triphenylphosphine (manufactured by Hokko Chemical Industry Co., Ltd.), and 0.62 g (0.291 mmol) of 50 mass% water-containing 5 mass%-Pd/C-STD type (manufactured by NE Chem Cat Co., Ltd.) were charged into the vessel, and after raising the temperature to 105 °C and reacting in a nitrogen gas atmosphere for four hours, 29 g (0.291 mol) of allyl acetate was further added thereto, and heating was continued for ten hours. Thereafter, stirring was stopped, and the mixture was allowed to stand to separate into an organic layer and an aqueous layer. Thereafter, pure water (200 g) was added until the precipitated salt (potassium acetate) dissolved, and 200 g of toluene was added while maintaining the temperature at 80 °C or higher to confirm that a white precipitate (potassium acetate) had not precipitated. The Pd/C was recovered by filtration (1 micrometer membrane filter (pressure (0.3 MPa) using an Advantech KST-142-JA). The filter cake was washed with 100 g of toluene and the aqueous layer was separated. The combined product of the toluene, which was used for washing the filter cake and the organic layer was washed three times with 200 g of pure water, and after the third washing, it was confirmed that the pH of the separated aqueous layer was 7.0. 4.5 g of activated carbon CN1 (manufactured by Nihon Norit Co.,

Ltd.) was added to the separated organic layer, and the mixture was heated to 60 °C and stirred at 300 rpm with a magnetic stirrer for 1 hour. The activated carbon was then removed by filtration (pressurization (0.3 MPa) using a 1-micron membrane filter (ADSTEK KST-142-JA)), and the mixture was concentrated under reduced pressure to remove the toluene and excess allyl acetate, whereby a brown oil triphenylmethane-type polyallyl ether compound (number average molecular weight Mn: 600, weight average molecular weight Mw: 800) was obtained. The yield at this stage was 95%. 200 g of the obtained triphenylmethane-type polyallyl ether compound and 200 g of phenol ($C_6H_5OH$, manufactured by Junsei Chemical Co., Ltd., boiling point 182 °C) were charged into a 1000 mL separable flask. Nitrogen gas was pumped into the reaction vessel, the temperature was raised to 170 °C while stirring at 300 rpm with a mechanical stirrer, and the Claisen rearrangement reaction was carried out for seven hours in a nitrogen gas atmosphere. Thereafter, the phenol was removed at 160 °C under reduced pressure, whereby the target reddish-brown triphenylmethane-type polyallyl phenol compound A1 (number average molecular weight Mn: 600, weight average molecular weight Mw: 800, degree of polymerization 3.5) was obtained. The yield was 92%.

•Polyallyl Phenol Compound A2

In formula (1a), $R^1$ and $R^2$ = hydrogen atom, $R^3$ to $R^7$ = hydrogen atom, and in formula (2), $R^{14}$ to $R^{18}$ = hydrogen atom.

A compound allylated at the ortho position or the para position to phenolic hydroxy group (hydroxy group: 191 equiv, number average molecular weight Mn: 500, weight average molecular weight Mw: 600, degree of polymerization: 2.6) was produced by the following method using a triphenylmethane-type phenolic resin Shonol™ TRI-220 (manufactured by Showa Denko, Co., Ltd.). The triphenylmethane-type polyallyl phenol compound A2 (number average molecular weight Mn: 500, weight average molecular weight Mw: 600, degree of polymerization: 2.6) was obtained by the same process as the production method of the polyallyl phenol compound A1 described above except that 150.0 g (hydroxy group: 0.82 mol) of the triphenylmethane-type phenolic resin Shonol™ TRI-220 (manufactured by Showa Denko, Co., Ltd.; number average molecular weight Mn: 350, weight average molecular weight Mw: 400) was used in place of the 150.0 g of triphenylmethane-type phenolic resin Shonol™ TRI-002 (manufactured by Showa Denko, Co., Ltd.). The yield was 93%.

• Polyallyl Phenol Compound A3

In formula (1b), $R^8$ and $R^9$ = hydrogen atom, Q = a 1,4-phenylene bis-methylene group, and in formula (2), $R^{14}$ to $R^{18}$ = hydrogen atom.

A compound allylated at the the para position to phenolic hydroxy group (hydroxy group: 222 equiv, number average molecular weight Mn: 900, weight average molecular weight Mw: 1900, degree of polymerization: 4.3) was produced by the following method using a phenol aralkyl resin (HE-100C-12; Air Water Inc.). The phenol aralkyl-type polyallyl phenol compound A3 (number average molecular weight Mn: 900, weight average molecular weight Mw: 1900, degree of polymerization: 4.3) was obtained by the same process as the production method of the polyallyl phenol compound A1 except that 150.0 g (hydroxy group: 0.76 mol) of the phenol aralkyl resin (HE-100C-12; Air Water Inc.; number average molecular weight Mn : 600, weight average molecular weight Mw: 850) was used in place of the 150.0 g of the triphenylmethane-type phenolic resin Shonol™ TRI-002 (manufactured by Showa Denko, Co., Ltd.). The yield was 95%.

• Polyallyl Phenol Compound A4

In formula (1c), $R^{10}$ = allyl group, $R^{11}$ and $R^{12}$ = hydrogen atom, $R^{13}$ = hydroxy group, Q = a 1,4-pheylene bis-methylene group, and in formula (2), $R^{14}$ to $R^{18}$ = hydrogen atom.

A compound (hydroxy group: 159 equiv, number average molecular weight Mn: 800, weight average molecular weight Mw: 1800, degree of polymerization: 5.0) in which part of naphthalene ring is allylated was produced by the following method using a naphthalene diol-type phenolic resin (SN-395, Nippon Steel Chemical Co., Ltd.). The naphthalene diol-type polyallyl phenol compound A4 (number average molecular weight Mn: 800, weight average molecular weight Mw: 1800, degree of polymerization: 5.0) was obtained by the same process as the production method of the polyallyl phenol compound A1 described above except that 150.0 g (hydroxy group: 1.1 mol) of the naphthalene diol-type phenolic resin (SN-395, Nippon Steel Chemical Co., Ltd., number average molecular weight Mn: 550, weight average molecular weight Mw: 1200) was used in place of the 150.0 g of the triphenylmethane-type phenolic resin Shonol™ TRI-002 (manufactured by Showa Denko, Co., Ltd.). The yield was 90%.

•Polyallyl Phenol Compound C1

In formula (3), $R^{19}$ and $R^{20}$ = hydrogen atom, and in formula (4), $R^{21}$ to $R^{25}$ = hydrogen atom.

A compound allylated at the ortho position or the para position to phenolic hydroxy group (hydroxy group: 154 equiv, number average molecular weight Mn: 1000, weight average molecular weight Mw: 3000, degree of polymerization: 6.6) was produced using a 1:1 mixture of phenol novolak resins Shonol™ BRG-556 and BRG-558 (Showa Denko, Co., Ltd.). Regarding the production method, refer to Example 3 of Japanese Unexamined Patent Publication (Kokai.) No. 2016-28129.

• Polyallyl Phenol Compound X

In formula (1b), $R^8$ and $R^9$ = hydrogen atom, the group corresponding to Q was a dicyclopentadienylene group (without an aromatic ring), and in formula (2), $R^{14}$ to $R^{18}$ = hydrogen atom.

First, a dicyclopentadiene-type phenol compound was synthesized as below in accordance with the description of Japanese Unexamined Patent Publication (Kokai) No. 63-99224. 150 g (1.59 mol) of phenol (manufactured by Junsei Chemical Co., Ltd.) was charged into a 1000 mL tri-neck flask having a reflux condenser, and after adding 2.25 g (15.9 mmol) of a boron trifluoride diethyl ether complex (manufactured by Tokyo Chemical Industry Co., Ltd.) while maintaining a temperature of 100 °C, 105 g (0.797 mol) of dicyclopentadiene (manufactured by Wako Pure Chemical Industries, Ltd.) was added dropwise over 1.5 hours. After dropwise addition, the temperature was maintained at 100 °C for 3 hours, allowed to cool, and the polymer was dissolved in 150 g of methyl ethyl ketone (manufactured by Junsei Chemical Co., Ltd.). 100 g of a 2% aqueous solution of sodium hydroxide was added to the polymer solution and shaking extraction was performed twice. Thereafter, the organic layer was washed three times with 150 g of pure water, and after the third washing, it was confirmed that the pH of the separated aqueous layer was 7.0. The separated organic layer was concentrated under reduced pressure to remove the methyl ethyl ketone and excess phenol, whereby 184 g (0.797 mol) of a brown solid dicyclopentadiene-type phenol compound (hydroxy group: 231 equiv, number average molecular weight Mn: 670, weight average molecular weight Mw: 1300) was obtained. The yield at this stage was 100%.

A compound X, which is allylated at the ortho position or the para position to phenolic hydroxy group (hydroxy group: 266 equiv, number average molecular weight Mn: 800, weight average molecular weight Mw: 1350, degree of polymerization: 3.0) was produced by the following method using the obtained dicyclopentadiene-type phenol compound. The dicyclopentadiene-type polyallyl phenol compound X was obtained by the same process as the production method of the polyallyl phenol compound A1 except that 150.0 g (hydroxy group 0.65 mol) of the dicyclopentadiene-type phenol compound was used in place of the 150.0 g of the triphenylmethane-type phenolic resin Shonol TRI-002 (manufactured by Showa Denko, Co., Ltd.). The yield was 95%.

[Raw Materials]

The raw materials other than the polyalkenyl phenol compounds used in the Examples and Comparative Examples are as described below:

- Aromatic bis-maleimide compound: BMI-4000 (2,2-bis[4-(4-maleimidophenyloxy)phenyl]propane, melting point: 165 °C, Daiwa Kasei Kogyo Co., Ltd.)
- Curing accelerator: Percumyl™ D (dicumyl peroxide, NOF Corporation)
- Silica filler: MSR2212 (spherical silica, average particle size 25.5 μm, Tatsumori Co., Ltd., treated with 0.5% by mass silane coupling agent KBM-403 (Shin-Etsu Chemical Co., Ltd.))

[Production of Curable Resin Composition]

•Example 1

100 parts by mass of BMI-4000 was added to a reaction vessel, heated to 170 °C, and stirred. When all of the BMI-4000 had melted and become a clear liquid, the temperature was lowered to 150 °C. 50 parts by mass of polyallyl phenol compound C1, which was heated and melted at 80 °C, and 50 pars by mass of polyallyl phenol compound A1 were added to the reaction vessel, and the three compounds were mixed by heating and stirring at 150 °C for 10 minutes. Blending was performed using the obtained mixture and each of the components shown in Table 1 below at the proportions shown in the table 1, and thereafter melt-kneading (110 °C, 10 minutes with a double-roller (eight-inch roller diameter) manufactured by Toyo Seiki) was carried out. Next, the mixture was allowed to cool at room temperature (25 °C) for one hour and solidify, and was subsequently ground using a mil mixer (Osaka Chemical Co., Ltd., model WB-1, 25 °C, 30 seconds), whereby the target powder curable resin composition was obtained.

•Example 2

A curable resin composition was obtained by the same procedure as in Example 1 except that the polyallyl phenol compound A2 was used in place of the polyallyl phenol compound A1 of Example 1.

•Example 3

A curable resin composition was produced in the same manner as Example 1 except that the polyallyl phenol compound A3 was used in place of the polyallyl phenol compound A1 of Example 1.

•Example 4

A curable resin composition was obtained by the same procedure as in Example 1 except that the polyallyl phenol compound A4 was used in place of the polyallyl phenol compound A1 of Example 1.

•Example 5

A curable resin composition was obtained by the same procedure as in Example 2 except that the mass of the polyallyl phenol compound A2 of Example 2 was changed to 20 parts and the mass of the polyallyl phenol compound C1 was changed to 80 parts.

•Example 6

A curable resin composition was obtained by the same procedure as in Example 3 except that the mass of the polyallyl phenol compound A3 of Example 3 was changed to 80 parts and the mass of the polyallyl phenol compound C1 was changed to 20 parts.

•Example 7

A curable resin composition was obtained by the same procedure as in Example 3 except that the mass of the polyallyl phenol compound A3 of Example 3 was changed to 20 parts and the mass of the polyallyl phenol compound C1 was changed to 80 parts.

•Comparative Example 1

A curable resin composition was obtained by the same procedure as in Example 1 except that 100 parts by mass of the polyallyl phenol compound C1 was used in place of 50 parts by mass of the polyallyl phenol compound A1 and 50 parts by mass of the polyallyl phenol compound C1 of Example 1.

•Comparative Example 2

A curable resin composition was obtained by the same procedure as in Example 1 except that the polyallyl phenol compound X was used in place of the polyallyl phenol compound A1 of Example 1.

| | | | Ex 1 | Ex 2 | Ex 3 | Ex 4 | Ex 5 | Ex 6 | Ex 7 | Comp Ex 1 | Comp Ex 2 |
|---|---|---|---|---|---|---|---|---|---|---|---|
| Blending Quantity (parts by mass) | Polyallyl Phenol Compound | A1 | 50 | | | | | | | | |
| | | A2 | | 50 | | | 20 | | | | |
| | | A3 | | | 50 | | | 80 | 20 | | |
| | | A4 | | | | 50 | | | | | |
| | | C1 | 50 | 50 | 50 | 50 | 80 | 20 | 80 | 100 | 50 |
| | | X | | | | | | | | | 50 |
| | Aromatic Bis-Maleimide Compound | | 100 | 100 | 100 | 100 | 100 | 100 | 100 | 100 | 100 |
| | Curing Accelerator | | 0.65 | 0.65 | 0.65 | 0.65 | 0.65 | 0.65 | 0.65 | 0.65 | 0.65 |
| | Silica Filler | | 800 | 800 | 800 | 800 | 800 | 800 | 800 | 800 | 800 |
| Results | UL-94 Flame Retardancy | | V-0 | V-0 | V-0 | V-0 | V-0 | V-0 | V-0 | V-1 | V-2 |
| | Burning Time of Each Sample (sec) | | 5 | 10 | 10 | 6 | 10 | 9 | 10 | 18 | 30 |
| | Tg (°C) | | 294 | 299 | 263 | 265 | 291 | 271 | 256 | 281 | 290 |

Table 2 shows that Examples 1 to 7 had excellent flame retardancies. Example 2 exhibited a high Tg and a suitable heat resistance. Conversely, Comparative Examples 1 and 2 failed to achieve V-0 in the UL-94 test, and the flame retardancies thereof were poor.

INDUSTRIAL APPLICABILITY

The curable resin composition according to the present invention can be used to provide electronic components which are excellent in flame retardancy. In particular, when used in a semiconductor encapsulation material for power devices, an encapsulation material having a high flame retardancy can be obtained. Since the use of halogen-based and phosphorus-based flame retardants that adversely affect reliability can be reduced, a highly reliable encapsulation material can be obtained.

## Claims

**1.** A curable resin composition comprising a polyalkenyl phenol compound (A) and a polymaleimide compound (B), wherein the polyalkenyl phenol compound (A) is a compound containing at least two structural units represented by the following formula (1a) or formula (1b), or a compound containing a structural unit represented by the following formula (1c):

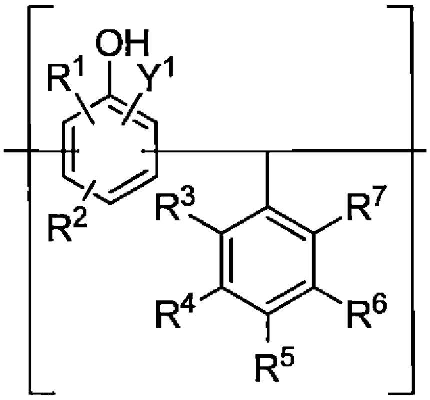

(1a)

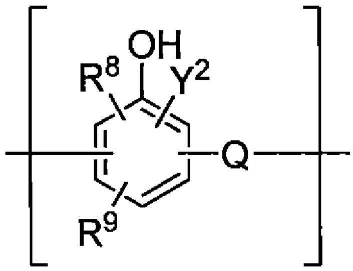

(1b)

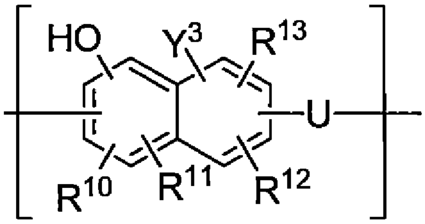

(1c)

where $R^1$ to $R^{13}$ each independently represent a hydrogen atom, a $C_{1-10}$ alkyl group, a $C_{1-2}$ alkoxy group, a $C_{2-6}$ alkenyl group, or a hydroxy group, $R^{10}$ to $R^{13}$ may be located on any of the carbon atoms constituting the naphthalene ring, Q represents a divalent organic group containing, in the main chain, an aromatic group which does not contain a phenolic hydroxy group, U represents a divalent organic group containing an aromatic ring, and $Y^1$ to $Y^3$ are each independently an alkenyl group represented by the following formula (2):

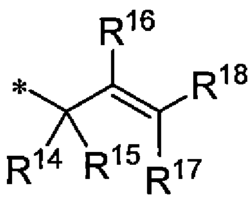

(2)

where $R^{14}$, $R^{15}$, $R^{16}$, $R^{17}$, and $R^{18}$ each independently represent a hydrogen atom, a $C_{1-5}$ alkyl group, a $C_{5-10}$ cycloalkyl group, or a $C_{6-12}$ aryl group, and * represents the bonding portion with the aromatic ring.

2. The curable resin composition according to claim 1, wherein $R^1$, $R^2$, $R^8$, $R^9$, $R^{10}$, $R^{11}$, $R^{12}$, and $R^{13}$ in formulas (1a), (1b), and (1c) are hydrogen atoms.

3. The curable resin composition according to claim 1 or 2, wherein the polyalkenyl phenol compound (A) is a compound containing at least two structural units represented by formula (1a), or is a compound containing a structural unit represented by formula (1c).

4. The curable resin composition according to any one of claims 1 to 3, wherein $R^3$ to $R^7$ in formula (1a) are each

independent selected from a hydrogen atom, an allyl group, and a hydroxy group.

5. The curable resin composition according to claim 1 or 2, wherein Q and U in formulas (1b) and (1c) are at least one selected from a 1,4-phenylene bis-methylene group and a 4,4'-biphenylene bis-methylene group.

6. The curable resin composition according to any one of claims 1 to 5, wherein the degree of polymerization of the polyalkenyl phenol compound (A), as determined from the molecular weight distribution measured by GPC, is 2 to 20.

7. The curable resin composition according to any one of claims 1 to 6, wherein the polyalkenyl phenol compound (A) is included in an amount of 5 to 200 parts by mass relative to 100 parts by mass of the polymaleimide compound (B).

8. The curable resin composition according to any one of claims 1 to 7, wherein the polymaleimide compound (B) is an aromatic polymaleimide compound.

9. The curable resin composition according to claim 8, wherein the polymaleimide compound (B) is at least one compound selected from bis(4-maleimidophenyl)methane and 2,2-bis[4-(4-maleimidophenyloxy)phenyl] propane.

10. The curable resin composition according to any one of claims 1 to 9, further comprising a polyalkenyl phenol compound (C) containing a structural unit represented by the following formula (3):

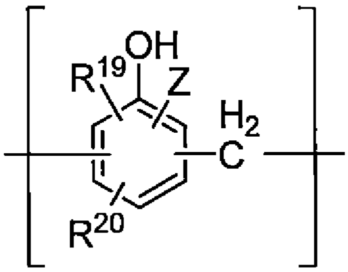
(3)

where $R^{19}$ and $R^{20}$ each independently represent a hydrogen atom, a $C_{1-10}$ alkyl group, a $C_{1-2}$ alkoxy group or hydroxy group, and Z is an alkenyl group represented by the following formula (4):

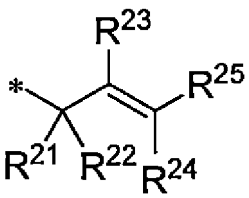
(4)

where $R^{21}$, $R^{22}$, $R^{23}$, $R^{24}$, and $R^{25}$ each independently represent a hydrogen atom, a $C_{1-5}$ alkyl group, a $C_{5-10}$ cycloalkyl group, or a $C_{6-12}$ aryl group, and *represents the bonding portion with the aromatic ring.

11. The curable resin composition according to claim 10, wherein the polyalkenyl phenol compound (C) is included in an amount of 5 to 2000 parts by mass relative to 100 parts by mass of the polyalkenyl phenol compound (A).

12. The curable resin composition according to any one of claims 1 to 11, further comprising a curing accelerator (D) in an amount of 0.01 to 10 parts by mass relative to a total 100 parts by mass of the polyalkenyl phenol compound (A), the polymaleimide compound (B), and the polyalkenyl phenol compound (C) (when present).

13. The curable resin composition according to any one of claims 1 to 12, further comprising a filler (E).

14. A cured product of the curable resin composition according to any one of claims 1 to 13.

15. A structure comprising a cured product of the curable resin composition according to any one of claims 1 to 13.

## INTERNATIONAL SEARCH REPORT

International application No.
PCT/JP2018/014455

A. CLASSIFICATION OF SUBJECT MATTER
Int.Cl. C08F212/34(2006.01)i, C08F222/40(2006.01)i, C08L61/06(2006.01)i

According to International Patent Classification (IPC) or to both national classification and IPC

B. FIELDS SEARCHED

Minimum documentation searched (classification system followed by classification symbols)
Int.Cl. C08F212/34, C08F222/40, C08L61/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 4-211449 A (SUMITOMO CHEMICAL CO.) 03 August 1992, claims, paragraphs [0013], [0022], [0026], examples & US 5252687 A, claims, column 3, lines 32-44, column 5, lines 26-46, column 6, lines 33-42, examples & EP 449708 A2 & KR 10-1995-0013815 B | 1-4, 6-9, 12-15<br>5, 10, 11 |
| X<br>A | JP 4-292617 A (FUJITSU LIMITED) 16 October 1992, claims, paragraphs [0005], [0006], [0008], [0009], examples (Family: none) | 1-4, 6-9, 12-15<br>5, 10, 11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.06.2018 | 26.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/014455

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 5-43630 A (MITSUBISHI PETROCHEMICAL CO.) 23 February 1993, claims, paragraphs [0001], [0015], [0016], examples<br>(Family: none) | 1-4, 6-8, 13-15<br>5, 9-12 |
| X<br><br>A | JP 2015-117374 A (MEIWA KASEI KK) 25 June 2015, claims, paragraphs [0027], [0028], [0030]-[0032], [0041]-[0043], [0049], examples<br>(Family: none) | 1, 3, 4, 6-9, 12-15<br>2, 5, 10, 11 |
| P, X<br>P, A | WO 2018/47417 A1 (SHOWA DENKO KK) 15 March 2018, claims, paragraphs [0025], [0033]-[0036], examples<br>(Family: none) | 1-9, 12-15<br>10, 11 |
| E, X<br>E, A | WO 2018/74040 A1 (SHOWA DENKO KK) 26 April 2018, claims, examples<br>(Family: none) | 1, 3-9, 12-15<br>2, 10, 11 |
| A | JP 5-9364 A (TOSHIBA CORPORATION) 19 January 1993, entire text<br>& US 5272377 A, entire text & EP 484157 A2 & KR 10-1996-0000704 B | 1-15 |
| A | JP 6-93047 A (TOAGOSEI CHEM IND CO., LTD.) 05 April 1994, entire text<br>(Family: none) | 1-15 |
| A | JP 2013-199627 A (HITACHI CHEMICAL COMPANY, LTD.) 03 October 2013, entire text<br>(Family: none) | 1-15 |
| A | JP 2015-117375 A (MEIWA KASEI KK) 25 June 2015, entire text, all drawings<br>(Family: none) | 1-15 |
| A | JP 2016-28129 A (SHOWA DENKO KK) 25 February 2016, entire text<br>(Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016074902 A
- JP 7165825 A
- JP 2091113 A
- JP 2011026253 A
- JP 2016028129 A
- JP 63099224 A